# DEMANDE DE BREVET EUROPEEN

(11) **EP 1 478 049 A1**
(43) Date de publication de la demande: **17.11.2004**
(21) Numéro de dépôt: 04291094.3
(22) Date de dépôt: 28.04.2004
(51) Int. Cl.: H01Q 1/32, H01Q 1/27, B60R 25/00, H04B 5/00

(54) **Dispositif de communication embarqué dans un véhicule et identifiant portatif destiné à communiquer avec celui-ci**

(30) Priorité: 16.05.2003 FR 0305865
(71) Demandeur: Delphi Technologies, Inc., Troy, MI 48007 (US)
(72) Inventeur: Lelandais, Guy, 91190 Gif-sur-Yvette (FR)
(74) Mandataire: Abello, Michel

(57) **Abrégé**

Véhicule (1) comportant un espace intérieur (4, 11) délimité par des parois et un dispositif de communication embarqué (2) comprenant un émetteur radiofréquence muni d'au moins une antenne d'émission pour émettre un message d'interrogation avec une fréquence d'onde porteuse prédéterminée inférieure à 100 MHz à destination d'un identifiant portatif (3), caractérisé par le fait que ladite antenne d'émission inclut au moins une électrode d'émission (5-10) en liaison électrique avec une sortie de potentiel dudit émetteur radiofréquence, ladite ou chaque électrode d'émission n'étant pas sensiblement résonante à ladite fréquence d'onde porteuse pour rayonner essentiellement un champ électrique dans une zone de champ proche de ladite électrode d'émission.

## Description

La présente invention se rapporte à un dispositif de communication embarqué dans un véhicule et à un identifiant portatif destiné à communiquer avec un tel dispositif de communication et à un procédé de transmission de signaux entre ceux-ci.

On connaît, par exemple d'après US4873530, un véhicule comportant un espace intérieur délimité par des parois et un dispositif de communication embarqué comprenant un émetteur radiofréquence muni d'au moins une antenne d'émission pour émettre un message d'interrogation avec une fréquence d'onde porteuse prédéterminée à destination d'un identifiant portatif, un récepteur radiofréquence muni d'au moins une antenne de réception pour recevoir au moins un message de réponse depuis ledit identifiant portatif et une unité logique apte à traiter ledit message de réponse et à commander l'actionnement d'au moins un organe dudit véhicule en fonction dudit message de réponse.

Par exemple, le dispositif de communication peut servir à mettre en oeuvre un procédé d'accès et/ou de démarrage sans clé ou mains libres. Dans ce cas, il n'est pas nécessaire d'utiliser une clé mécanique pour effectuer certaines opérations. Le procédé d'accès mains libres permet de commander à distance un organe de condamnation de l'accès au véhicule, par exemple une serrure de portière ou de haillon de coffre. Le procédé de démarrage mains libres permet de commander à distance un organe de démarrage du véhicule.

Pour un véhicule muni d'un système de commande mains libres, l'identifiant portatif est destiné à être porté par un utilisateur autorisé du véhicule et il remplace la clé mécanique. Le dispositif de communication embarqué sur le véhicule établit un dialogue bidirectionnel à distance avec l'identifiant portatif pour authentifier l'utilisateur et commander les serrures des ouvrants, respectivement des moyens de mise en marche du moteur, lorsque l'utilisateur a été reconnu authentique.

Dans un tel véhicule, pour des raisons de sécurité, il est nécessaire de tenir compte de la position de l'identifiant portatif lors de différentes étapes de la communication. Par exemple, il est préférable de n'autoriser le démarrage du véhicule que si l'identifiant portatif se trouve à l'intérieur du véhicule et, a contrario, de n'autoriser la condamnation des portières, respectivement du haillon de coffre, que si l'identifiant portatif se trouve à l'extérieur de l'habitacle du véhicule, respectivement de son coffre. Quant à la décondamnation des serrures, celle-ci ne doit être autorisée que lorsque l'utilisateur est assez près du véhicule pour être conscient du déroulement des opérations commandées, afin d'éviter une mise en oeuvre accidentelle ou frauduleuse du procédé de commande.

Pour la liaison depuis le dispositif de communication embarqué vers l'identifiant portatif, il est courant d'utiliser un champ magnétique modulé, avec une fréquence de porteuse située par exemple entre 10 kHz et 20 kHz, ou aux environs de 125 kHz, aux environs de 6 MHz ou encore aux environs de 13 MHz, en fonction des bandes autorisées. La liaison inverse est le plus couramment effectuée avec une fréquence de porteuse de 315 MHz, 433 MHz, dans la bande UHF ou encore au-dessus.

Une antenne magnétique est typiquement constituée de plusieurs spires de câble conducteur, avec éventuellement un noyau de ferrite pour améliorer l'efficacité. Une telle antenne présente une zone de couverture sensiblement circulaire assez restreinte, par exemple d'environ 1 m de rayon. Pour couvrir une zone de transmission autorisée qui est étendue et/ou de forme complexe, il est nécessaire de munir le véhicule d'au moins dix antennes magnétiques, ce qui entraîne des coûts et de difficultés de montage et de branchement. Il est aussi connu d'employer comme antenne magnétique une large boucle conductrice entourant la zone de communication visée. Cependant, la zone de couverture effective d'une telle antenne est assez floue.

US2003/0090434 décrit des émetteurs-récepteurs portatifs dont les antennes de réception sont exclusivement des antennes en boucles qui reçoivent des signaux sous la forme d'un flux magnétique. De telles antennes sont structurellement insensibles au champ électrique environnant. Dans un tel émetteur-récepteur, il est implicite pour l'homme du métier que tout conducteur sensible au champ électrique est source de parasites indésirables et doit être blindé de manière appropriée.

EP0645837 décrit un récepteur radio qui est monté dans un véhicule et un émetteur qui est portatif. La communication est effectuée dans la bande UHF, c'est-à-dire à plus de 300 MHz.

US5596234 décrit un dispositif de télécommande pour véhicule qui inclut un émetteur portatif de petite taille destiné à être porté par un utilisateur du véhicule et une unité de réception positionnée à l'intérieur d'un véhicule. L'émetteur situé à l'extérieur du véhicule communique avec l'unité de réception positionnée à l'intérieur et entourée de parois métalliques, ce qui exclut d'utiliser un couplage électrostatique entre eux. Il n'est pas décrit de moyens permettant de doter l'unité de réception d'une fonction d'émission.

Le document FR 2 783 358 décrit une unité émettrice et/ou réceptrice pour un système antivol de véhicule automobile, dans laquelle au moins un élément de contact d'un connecteur est utilisé comme antenne-tige. La longueur de l'antenne est adaptée à la longueur d'onde des signaux à recevoir, qui ont une fréquence porteuse élevée, par exemple 315 MHz ou environ 433 MHz. Pour fonctionner à une fréquence plus basse, cette antenne doit être allongée proportionnellement.

Le document FR 2 747 513 décrit une antenne émettrice ou réceptrice disposée dans un émetteur portable d'un système antivol pour véhicule automobile. L'antenne rayonne une énergie électromagnétique à haute fréquence, approximativement 433 MHz. L'antenne est accordée à la longueur d'onde de ce rayonnement et se comporte comme un résonateur. Pour fonctionner à une fréquence plus basse, cette antenne devrait également être allongée proportionnellement.

L'invention vise à remédier à au moins certains des inconvénients précités. En particulier, l'invention a pour but de réaliser une transmission de signaux entre un véhicule et un identifiant portatif en tenant compte de la position de l'identifiant avec un coût d'équipement réduit.

Pour cela, l'invention fournit un véhicule comportant un espace intérieur délimité par des parois et un dispositif de communication embarqué comprenant un émetteur radiofréquence muni d'au moins une antenne d'émission pour émettre un message d'interrogation avec une fréquence d'onde porteuse prédéterminée inférieure à 100 MHz à destination d'un identifiant portatif, caractérisé par le fait que ladite au moins une antenne d'émission inclut au moins une électrode d'émission en liaison électrique avec une sortie de potentiel dudit émetteur radiofréquence, ladite ou chaque électrode d'émission n'étant pas sensiblement résonante à ladite fréquence d'onde porteuse pour rayonner essentiellement un champ électrique dans une zone de champ proche de ladite électrode d'émission.

L'invention part du constat que l'énergie électromagnétique rayonnée par une antenne comporte à la fois des composantes électrique et magnétique qui sont égales dans le champ lointain, mais que ce n'est pas forcément le cas dans le champ proche, c'est-à-dire à une distance inférieure à une ou quelques longueurs d'ondes. Plus précisément, dans la zone de champ proche d'une antenne d'émission, il n'existe que les composantes de champ qui correspondent au type d'antenne, c'est-à-dire essentiellement un champ magnétique pour une antenne de type magnétique, comme une bobine à noyau ou une boucle conductrice, essentiellement un champ électrique pour une antenne de type électrique, c'est-à-dire une antenne non résonante et qui présente un terme réel prédominant dans son impédance, et les deux champs pour une antenne mixte, c'est-à-dire une antenne résonante ou accordée. L'invention propose ainsi de réaliser un couplage essentiellement électrique entre au moins une électrode d'émission du dispositif embarqué et au moins une électrodes de réception de l'identifiant portatif, à la manière d'un transformateur capacitif. Ainsi, le signal est transporté par le champ proche non propagatif, c'est-à-dire par des ondes évanescentes.

Lors de la transmission, le couplage entre l'électrode d'émission et l'électrode de réception peut aussi être qualifié de couplage électrostatique. En effet, pour une électrode non résonante, en particulier une électrode très petite devant la longueur d'onde à émettre, on sait que le rayonnement est correctement décrit par le modèle du dipôle électrique oscillant, dont le champ électrique présente trois termes :
- un terme appelé électrostatique, qui décroît comme 1/r³, où r désigne l'éloignement par rapport au dipôle,
- un terme appelé inductif, qui décroît comme 1 /(r²λ), où λ désigne la longueur d'onde dans le milieu de environnant,
- et un terme appelé radiatif, qui décroît comme 1/(rλ²).

On sait que le champ magnétique d'un tel dipôle ne présente que les termes inductifs et radiatifs. Ainsi, dans la zone de champ proche, en particulier lorsque r<λ, le terme électrostatique prédomine sur tous les autres. En particulier, le champ magnétique est insignifiant dans cette zone.

La ou chaque électrode d'émission est en matériau conducteur et est reliée à une sortie de potentiel de l'émetteur, typiquement au niveau d'une borne d'émission de l'émetteur, pour imposer un potentiel électrique à l'électrode d'émission et émettre ainsi un champ électrique autour de celle-ci. En d'autres termes, une telle électrode d'émission forme une branche d'extrémité du circuit électrique d'émission, sans former de boucle vers la masse ou vers un autre noeud de potentiel. On réalise ainsi une ou plusieurs antennes d'émission intérieures de type électrique. Ces antennes de type électrique n'ont pas besoin d'être accordées à la longueur d'onde porteuse. Ainsi, les dimensions et la géométrie de l'électrode peuvent être choisies avec une grande liberté, en fonction des contraintes de placement et d'encombrement, sans qu'il ne soit nécessaire de respecter une longueur ou une forme prescrite par des conditions d'accord. On peut ainsi utiliser une fréquence d'onde porteuse assez basse, pour laquelle une antenne accordée aurait un encombrement inacceptable. L'absence d'accord renforce la prévalence du rayonnement électrique sur le rayonnement magnétique dans le rayonnement émis par l'électrode d'émission en champ proche.

Une électrode d'émission non résonante peut revêtir de nombreuses formes, par exemple un dépôt métallique sur une plaquette de circuit imprimé, un revêtement métallique sur une couche de plastique, un tissu conducteur, un câble conducteur dans un espace ouvert ou dans un toron d'alimentation, un treillis métallique, etc. Des modes de réalisation particulièrement économiques sont donc possibles.

De préférence, au moins une électrode d'émission est agencée dans l'espace intérieur. Une électrode d'émission peut être agencée à de nombreux emplacements dans l'espace intérieur. L'emplacement d'une électrode d'émission est choisi en fonction de la zone de transmission qu'elle doit couvrir. Par exemple, au moins une électrode d'émission intérieure est agencée sur ou dans au moins un organe choisi parmi une planche de bord, l'assise d'un siège avant, le dossier d'un siège avant, l'assise d'un siège arrière, le dossier d'un siège arrière, une plage arrière et une console centrale.

Lorsqu'elle rayonne dans l'espace intérieur du véhicule, une électrode d'émission intérieure rayonne essentiellement un champ électrique. La portée de la transmission peut être réglée par le niveau d'émission et la sensibilité du récepteur. Cependant, quel que soit ce réglage, l'avantage du rayonnement électrique sur le rayonnement magnétique est d'être plus efficacement atténué par la cage de Faraday constituée par les parois métalliques du véhicule. De ce fait, la zone de transmission fournie par une électrode d'émission intérieure ne déborde pas ou peu de l'espace intérieur et se laisse facilement confiner dans cet espace intérieur ou dans une portion de celui-ci. La détection de l'identifiant dans l'espace intérieur ou dans une portion de celui-ci, et donc la détermination de la localisation de l'identifiant, s'en trouvent facilitées. Cet effet de confinement est obtenu avec des parois conductrice de l'électricité, même si elles sont en matériau diamagnétique ou paramagnétique, par exemple en aluminium. Ce ne serait pas le cas pour une transmission de signal sous la forme d'un rayonnement magnétique. En outre, le confinement du champ magnétique par une cage de Faraday est toujours moins efficace.

De préférence, au moins une électrode d'émission est agencée à l'extérieur dudit espace intérieur. Ainsi, une transmission du message d'interrogation à l'extérieur du véhicule est rendue possible. Grâce au confinement du champ électrique procuré par la structure métallique du véhicule, la zone de transmission fournie par l'électrode d'émission extérieure ne rentre pas ou peu dans l'espace intérieur et se laisse facilement confiner à l'extérieur du véhicule. La détection de l'identifiant dans l'espace extérieur du véhicule ou dans une portion de celui-ci, et donc la détermination de la localisation de l'identifiant, s'en trouvent facilitées.

Une électrode d'émission extérieure peut être agencée à de nombreux emplacements sur le véhicule. L'emplacement d'une électrode d'émission extérieure est choisi en fonction de la zone de transmission qu'elle doit couvrir. Avantageusement, au moins une électrode d'émission extérieure est agencée sur ou dans au moins un organe choisi parmi un pare-choc avant, un pare-choc arrière, une poignée de portière et un rétroviseur.

Selon une réalisation particulière de l'invention, au moins une électrode d'émission est agencée sur ou dans une vitre de fenêtre. Les parois non métalliques de l'habitacle, comme les vitres, ne forment pas un écran très efficace contre la propagation du champ électrique, de sorte qu'elles constituent, pour les électrodes d'émission, une zone de transition permettant d'émettre aussi bien en dedans qu'en dehors de l'espace intérieur, selon la configuration de l'électrode.

La fréquence d'onde porteuse est choisie inférieure à 100 MHz, par exemple inférieure ou égale à environ 13,6 MHz ou inférieure ou égale à environ 125 kHz. A partir de 100 MHz, la longueur d'onde porteuse dans l'air est supérieure à 3 m. Or on ne permet en général pas des communications entre le véhicule et l'identifiant au-delà d'une certaine distance autorisée, par exemple dans un rayon de 10m. Dans cette plage de fréquence, cette distance autorisée se trouve dans la zone de champ proche des électrodes d'émission du véhicule, c'est-à-dire est inférieure à une ou quelques longueurs d'ondes autour de chaque électrode. Ainsi, on assure qu'une transmission essentiellement par champ électrique est rendue possible dans un rayon suffisant.

Selon une réalisation particulière de l'invention, ladite ou chaque électrode d'émission est alimentée par l'intermédiaire d'un transformateur élévateur de tension. Selon une autre réalisation particulière de l'invention, ladite ou chaque électrode d'émission est alimentée par l'intermédiaire d'un circuit passe bande présentant une résonance dans une plage de résonance incluant ladite fréquence d'onde porteuse. Par exemple, une électrode d'émission intérieure ou extérieure peut ainsi présenter un potentiel électrique d'émission d'amplitude entre 10 et 200 V, par exemple de l'ordre de 100V, pour que le signal transmis ressorte du bruit de fond électrique et pour obtenir au niveau d'une électrode de réception de l'identifiant un potentiel de réception valant, par exemple, 10 à 20 mV.

Avantageusement, ledit émetteur radiofréquence comporte une borne de masse en liaison électrique avec des parois métalliques du véhicule. On peut produire une différence de potentiel entre une électrode d'émission et la masse, ce qui entraîne la formation de lignes de champ entre l'électrode d'émission et les parois métalliques du véhicule. Pour une électrode d'émission intérieure, en fonction de son emplacement, on peut ainsi produire un rayonnement d'antenne sur un angle large, voire quasi isotrope. De préférence, l'électrode d'émission intérieure ou extérieure est aussi éloignée que possible des parois métalliques pour améliorer la distribution du rayonnement électrique.

De préférence, ledit dispositif de communication embarqué comporte au moins deux électrodes d'émission reliées respectivement à au moins deux sorties de potentiels dudit émetteur radiofréquence, ledit émetteur radiofréquence étant apte à produire une différence de potentiel entre lesdites sorties de potentiel pour émettre ledit message d'interrogation. En d'autres termes, le message d'interrogation est émis en produisant une différence de potentiel entre les deux électrodes d'émission. Ainsi, une zone de transmission particulière est créée en fonction de la disposition des deux électrodes, notamment entre elles. Ceci est possible aussi bien à l'intérieur qu'à l'extérieur de l'espace intérieur du véhicule.

Avantageusement, le dispositif de communication embarqué comporte plusieurs électrodes d'émission, lesdites électrodes d'émission étant reliées à au moins un sélecteur d'antenne dudit émetteur radiofréquence apte à sélectionner différentes électrodes d'émission et/ou différents couples d'électrodes d'émission pour émettre ledit message d'interrogation. On peut ainsi transmettre le message d'interrogation dans différentes zones afin de déterminer la localisation de l'identifiant et/ou de conditionner l'actionnement d'un organe à la présence de l'identifiant dans une zone de transmission prescrite.

L'invention fournit également un identifiant portatif destiné à communiquer avec un dispositif de communication embarqué dans un véhicule, ledit identifiant comprenant un récepteur radiofréquence muni d'une antenne de réception apte à recevoir un message d'interrogation à une fréquence d'onde porteuse prédéteminée inférieure à 100 MHz depuis ledit dispositif de communication, caractérisé par le fait que ladite antenne de réception comporte au moins une paire d'électrodes de réception mutuellement espacées qui sont respectivement en liaison électrique avec au moins une paire d'entrées de potentiel dudit récepteur radiofréquence pour produire entre lesdites entrées de potentiel une différence de potentiel dépendant d'unchamp électrique environnant.

Une électrode de réception peut revêtir de nombreuses formes présentant un coût avantageux, par exemple une piste métallique sur une plaquette de circuit imprimé, un revêtement métallique sur une couche de plastique, un tissu conducteur, un câble conducteur, un treillis métallique, etc. Les deux électrodes de réception de chaque paire se polarisent de manière différente lorsque le champ environnant présente une composante non nulle selon leur direction d'espacement mutuel. Il en résulte une différence de potentiel entre les entrées de potentiel du récepteur, qui est représentative de ladite composante de champ.

Au cours de la transmission, les électrodes d'émission et de réception se comportent comme les armatures d'un condensateur, de sorte que le niveau de signal reçu varie globalement comme la capacité du condensateur équivalent, c'est-à-dire proportionnellement à la surface des électrodes et à la constante diélectrique du milieu de transmission, et de manière inversement proportionnelle à l'écart entre électrodes d'émission et de réception.

Selon un mode de réalisation particulier de l'invention, au moins une desdites électrodes de réception est remplacée par une masse électrique dudit identifiant.

Avantageusement, plusieurs paires d'électrodes de réception présentent des espacements mutuels selon plusieurs directions distinctes. De préférence, on prévoit deux ou trois paires d'électrodes de réception espacées mutuellement selon respectivement deux ou trois directions perpendiculaires deux à deux. Ainsi, la réception d'un champ électrique est assurée quelle que soit l'orientation de l'identifiant.

Pour la réception d'un champ électrique, les électrodes de réception ne sont pas nécessairement accordées à la fréquence d'onde porteuse. Un tel accord pourrait demander une électrode de dimension incompatible avec un identifiant portatif. De préférence, ladite ou chaque électrode de réception n'est pas sensiblement résonante à ladite fréquence d'onde porteuse, ce qui laisse une grande liberté quant à sa conception.

Avantageusement, ladite ou chaque paire d'électrodes de réception est reliée à deux bornes d'un circuit passe bande présentant une résonance dans une plage de résonance incluant ladite fréquence d'onde porteuse.

De préférence, chacune desdites entrées de potentiel comporte un composant à haute impédance et très faible capacité. L'adaptation d'impédance entre émetteur et récepteur électrique peut ainsi être optimisée. Pour cela, on peut utiliser, par exemple, un transistor de type MOS (Metal Oxyde Semiconductor), qui fournit une impédance de l'ordre de 10¹⁰ Ω et une capacité inférieure à 10pF, de préférence inférieure à 1 pF. Cette caractéristique permet aussi de limiter la sensibilité du récepteur au champ magnétique et donc de sélectionner spécifiquement le champ électrique environnant.

Avantageusement, ladite ou chaque paire d'entrées de potentiel alimente de manière différentielle un amplificateur dudit récepteur radiofréquence.

Selon une réalisation particulière de l'invention, ledit récepteur radiofréquence comporte un filtre passe bande comprenant un convertisseur d'impédance relié à une capacité pour représenter une inductance. L'avantage d'un tel montage est de créer une inductance relativement élevée avec un encombrement très inférieur à celui d'un enroulement sur un noyau.

Avantageusement, au moins une desdites électrodes de réception est constituée d'un revêtement métallique, qui est agencé sur une surface intérieure d'un boîtier d'identifiant en matière isolante et relié électriquement à une entrée de potentiel dudit récepteur radiofréquence. Une telle forme d'électrode de réception permet d'utiliser de manière optimale l'espace disponible dans le boîtier d'identifiant, qui est par exemple en matière plastique. Un tel revêtement métallique peut notamment être disposé à distance des composants constituant la masse électrique de l'identifiant, de manière à produire, entre ladite entrée de potentiel et la masse, une différence de potentiel dépendant du champ électrique environnant.

Au sens de l'invention, l'espace intérieur du véhicule inclut tout espace délimité par des parois sur au moins certains de ses côtés, cet espace pouvant être habitable, comme l'habitacle d'une automobile ou d'un poids-lourd, ou non habitable, comme le coffre. L'espace intérieur du véhicule peut être entièrement clos par des parois, incluant une paroi de plancher, une paroi de plafond et des parois latérales ou, a contrario, être ouvert sur un ou plusieurs côtés, par exemple sur le coté supérieur dans le cas de l'habitacle d'un véhicule cabriolet. L'invention s'applique aussi aux véhicules dits « monospace » dans lesquels le coffre et l'espace habitable ne sont pas séparés.

L'invention fournit également un procédé de transmission de signal entre un véhicule muni d'un émetteur radiofréquence embarqué et un identifiant portatif muni d'un récepteur radiofréquence, comprenant l'étape consistant à transmettre un signal avec une fréquence d'onde porteuse prédéterminée inférieure à 100 MHz entre une antenne d'émission dudit émetteur et une antenne de réception dudit récepteur, caractérisé par le fait que ledit signal est transmis en réalisant un couplage essentiellement électrique en champ proche entre au moins une électrode d'émission faisant partie de ladite antenne d'émission et au moins une électrode de réception faisant partie de ladite antenne de réception.

Avantageusement, le niveau du signal émis par ladite au moins une électrode d'émission est réglé de manière à empêcher ladite transmission lorsque la distance entre le véhicule et l'identifiant dépasse une distance autorisée qui est inférieure ou égale à la longueur d'onde de ladite onde porteuse dans l'air.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue de dessus écorchée d'un véhicule muni d'un système de commande mains libres incluant un dispositif de communication embarqué et un identifiant portatif selon l'invention,
- la figure 2 est une vue schématique du véhicule de la figure 1 en coupe selon la ligne II-II,
- la figure 3 est une vue analogue à la figure 1, représentant des électrodes d'émission extérieures du véhicule,
- la figure 4 représente un émetteur radiofréquence selon un premier mode de réalisation convenant pour le dispositif de communication embarqué de la figure 1,
- la figure 5 représente un émetteur radiofréquence selon un deuxième mode de réalisation convenant pour le dispositif de communication embarqué de la figure 1,
- la figure 6 représente l'identifiant portatif de la figure 1 en coupe horizontale,
- la figure 7 représente l'identifiant portatif de la figure 1 en coupe transversale selon la ligne VII-VII,
- les figures 8 à 10 représentent un récepteur radiofréquence selon trois modes de réalisation convenant pour l'identifiant portatif de la figure 1.

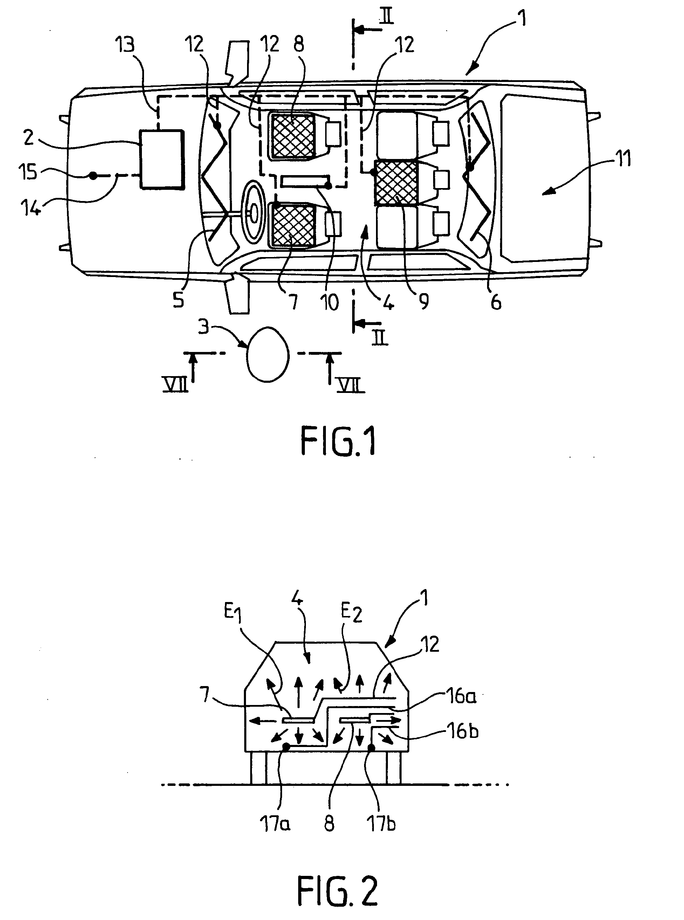

La figure 1 représente schématiquement un véhicule automobile 1, dont le pavillon est omis pour laisser voir l'intérieur de l'habitacle 4. Le véhicule 1 est équipé d'un système d'accès et de démarrage mains libres incluant une unité centrale embarquée 2 et un identifiant portatif 3. De manière connue en soi, l'unité centrale 2 et l'identifiant portatif 3 comportent chacun un émetteur et un récepteur radiofréquence pour effectuer un dialogue bidirectionnel, selon un protocole prédéfini, de préférence crypté. L'unité centrale 2 inclut une unité logique qui commande l'émission d'un message d'interrogation à destination de l'identifiant 3, soit de manière périodique, soit en réponse à une action d'initialisation. Par exemple, l'initialisation du protocole de communication peut être activée en touchant ou en actionnant la poignée extérieure de porte, ou encore par détection de la présence de la main au voisinage de la poignée extérieure de porte, pour l'accès mains libres ; ou en appuyant sur un bouton de démarrage sur le tableau de bord, pour le démarrage mains libres. En variante, cette initialisation peut être déclenchée en actionnant un bouton de commande de l'identifiant portatif 3.

Lorsqu'un message de réponse est reçu depuis l'identifiant 3, l'unité centrale 2 traite ce message pour vérifier l'habilitation de l'identifiant 3 et, en cas de succès, commande les serrures ou le démarreur du véhicule 1, selon un programme de commande connu en soi. Dans la suite, seule la liaison montante entre l'unité centrale 2 et l'identifiant 3 est décrite en détails.

Pour cela, le véhicule 1 comporte une ou plusieurs électrodes d'émission de type électrique disposées à l'intérieur de l'habitacle 4. Sur la figure 1, cinq électrodes d'émission intérieures sont représentées. L'électrode 5 est un fil conducteur isolé agencé dans la planche de bord, par exemple sous un revêtement plastique extérieur de la planche de bord. Afin d'optimiser la distribution du rayonnement électrique, l'électrode 5 est placée à distance de la pièce métallique qui soutient la base du pare-brise. L'électrode 6 est un fil conducteur agencé similairement dans la plage arrière. Les électrodes 7, 8 et 9 sont des treillis métalliques souples placés dans l'assise des sièges avant et d'un siège arrière. L'électrode 10 est une métallisation en film sur la partie haute de la console centrale disposée entre les sièges avant. Comme les autres électrodes intérieures, cette métallisation est recouverte d'une couche d'isolant pour éviter tout contact avec un occupant du véhicule, ce qui entraînerait des risques de brûlure électrique.

Selon les objectifs de couverture, on peut employer une ou plusieurs des électrodes 5 à 10. Des électrodes d'émission intérieures peuvent être aussi placées à d'autres endroits de l'habitacle 4 ou dans le coffre 11. Du fait qu'elles ne doivent pas être résonantes, les électrodes d'émission intérieures peuvent être conçues avec une grande liberté, notamment très petites par rapport à la longueur de l'onde porteuse à émettre. Le détail de leur géométrie n'est pas essentiel.

Chacune des électrodes d'émission intérieures 5 à 10 est reliée à une borne d'émission de l'émetteur par un fil d'alimentation isolé, comme représenté par les traits interrompus 12 sur la figure 1. Cette représentation est schématique car, en fait, un fil d'alimentation 12 distinct existe pour chaque électrode, de sorte qu'une liasse de fils d'alimentation 13 est connectée à l'unité centrale 2. L'unité centrale 2 possède au moins un fil de masse 14 relié à la caisse du véhicule 1 au niveau d'au moins une borne de masse 15, qui se situe par exemple au niveau de la batterie du véhicule.

En référence à la figure 2, pour émettre le message d'interrogation par une ou plusieurs électrodes d'émission intérieures, par exemple les électrodes 7 et 8, l'unité centrale 2 applique à ces électrodes un signal de potentiel électrique à travers les fils d'alimentation 12 correspondants. En raison de la différence de potentiel entre l'électrode et la masse électrique du véhicule 1, un champ électrique est rayonné dans toutes les directions autour de l'électrode, comme représenté schématiquement par les flèches E₁ (électrode 7) et E₂ (électrode 8). Pour faciliter le branchement électrique des électrodes d'émission, un fil de masse respectif 16a-b peut être associé à chaque électrode 7 et 8 et relié à une borne de masse respective 17a-b. Toutefois, il n'est indispensable de prévoir plusieurs fils de masse.

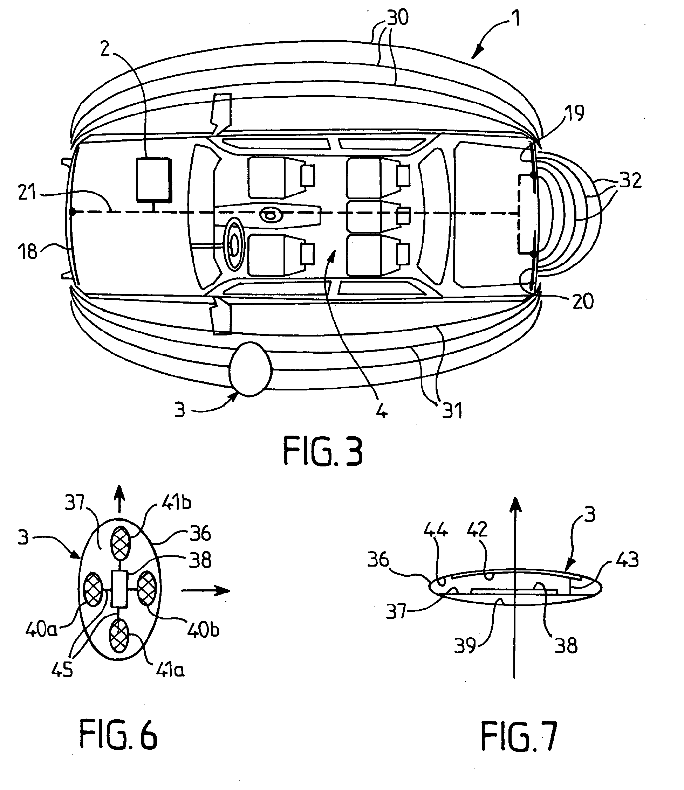

En référence à la figure 3, le véhicule 1 peut aussi être muni d'électrodes d'émission extérieures de type électrique. L'électrode 18 est une métallisation en film sur un pare choc avant en plastique. Les électrodes 19 et 20 sont des métallisations similaires, isolées l'une de l'autre, disposées sur deux moitiés respectives d'un pare choc arrière en plastique. Les électrodes extérieures 18 à 20 sont également recouvertes d'un isolant pour éviter tout contact avec une personne, ce qui entraînerait des risques de brûlure électrique. Les électrodes extérieures 18 à 20 peuvent également être réalisées en fil conducteur, ou encore avec d'autres formes de conducteurs électriques.

Comme les électrodes intérieures, les électrodes extérieures 18 à 20 sont reliées à l'unité centrale 2 par des fils d'alimentation respectifs 21, représentés schématiquement par des traits interrompus. Le cheminement de ces fils est purement illustratif sur la figure 3. En pratique, ce cheminement doit être adapté à l'installation électrique du véhicule 1, en utilisant de préférence les torons d'alimentation préexistants.

Dans l'unité centrale 2, les fils d'alimentation 12 et 21 des électrodes d'émission intérieures et extérieures sont reliés à des sorties de potentiels d'un émetteur radiofréquence faisant partie de l'unité centrale 2, qui va maintenant être décrit en référence aux figures 4 et 5.

La figure 4 représente un émetteur radiofréquence 22 selon un premier mode de réalisation. Il comporte schématiquement un générateur de signal 23 qui engendre le message d'interrogation sous la forme d'un signal de tension oscillant, correspondant à une onde porteuse modulée selon une technique de modulation quelconque. L'onde porteuse présente par exemple une fréquence de 125kHz ou 13,6MHz. Ce signal de tension est amplifié successivement par un amplificateur 24, qui est alimenté depuis la batterie, par exemple sous 12V, et par un transformateur élévateur de tension 25. Il est prévu un facteur environ 10 entre le nombre de spires de l'enroulement secondaire 27 et celui de l'enroulement primaire, pour obtenir une tension d'environ 100V sur ou entre les électrodes d'émission. Le transformateur 25 peut aussi être un autotransformateur. Une capacité 26 peut être montée en parallèle avec l'enroulement secondaire 27 du transformateur électrique 25 pour former un circuit résonant, dont la plage de résonance est sélectionnée pour englober la fréquence de l'onde porteuse. Le facteur de qualité peut être par exemple de l'ordre de 10 à 30. Une résonance trop aiguë peut nuire à la transmission du signal modulé. Toutefois, la capacité 26 est facultative car aucun circuit résonant n'est nécessaire si le générateur de signal 23 engendre un signal de spectre assez pur.

Les deux bornes de sortie de l'enroulement secondaire 27 sont reliées à des sélecteurs d'antennes 28 et 29, par exemple sous la forme de commutateurs à transistor ou de relais à contact. Les sélecteurs d'antennes 28 et 29 sont commandés par l'unité logique de l'unité centrale 2 pour sélectionner celle ou celles des électrodes d'émission 5 à 10 et 18 à 20 devant émettre le message d'interrogation, selon un programme d'émission prédéterminé.

Comme visible sur la figure 3, les électrodes d'émission extérieures sont de préférence alimentées dans un mode différentiel, c'est-à-dire en appliquant une différence de potentiel entre deux électrodes, de manière à créer une zone de transmission entre les deux électrodes sélectionnées. Ainsi, pour émettre le message d'interrogation sur le flanc droit du véhicule 1, le sélecteur 28 est positionné sur l'électrode 18 et le sélecteur 29 est positionné sur l'électrode 19. Dans ce cas, les lignes de champ prennent globalement la forme des lignes 30 de la figure 3, puisqu'il s'agit essentiellement d'un champ de type électrostatique, et définissent une zone de transmission essentiellement sur la droite du véhicule 1. En alimentant les électrodes 18 et 20, on aurait obtenu une zone de transmission essentiellement sur la gauche du véhicule 1, représentée par les lignes 31 de la figure 3. Sur la figure 4, les sélecteurs d'antennes 28 et 29 sont représentés de manière illustrative. En pratique, il est aussi utile de pouvoir alimenter les électrodes 19 et 20 en mode différentiel pour créer une zone de communication située essentiellement derrière le véhicule 1, représentée par les lignes 32 de la figure 3. En créant ainsi plusieurs zones de transmission à l'extérieur du véhicule 1, l'identifiant 3 peut facilement être localisé par l'unité centrale 2. Par exemple, dans la configuration représentée sur la figure 3, l'identifiant 3 n'aurait pas répondu à une transmission dans la zone 30 ou 32, et aurait répondu à une transmission dans la zone 31.

Pour émettre le message d'interrogation à l'intérieur de l'habitacle 4 à travers l'électrode 7, comme représenté sur la figure 2, le sélecteur 28 est positionné sur l'électrode 7 et le sélecteur 29 est positionné sur le fil de masse 16a. En variante, il est également possible d'alimenter des électrodes intérieures dans un mode différentiel, par exemple les électrodes 5 et 6, pour créer une zone de transmission particulière.

La figure 5 représente un émetteur radiofréquence 122 selon un deuxième mode de réalisation. A la différence de l'émetteur 22, le transformateur élévateur de tension est remplacé par un circuit résonant 125 comportant une capacité 33 et une inductance 34. La plage de résonance est sélectionnée pour englober la fréquence de l'onde porteuse. Le facteur de qualité peut être par exemple de l'ordre de 10 à 30. La capacité 33 est choisie assez grande pour dominer largement la capacité naturelle existant entre les électrodes d'émission et la masse électrique du véhicule. Ainsi, les qualités de l'émission ne seront pas sensibles aux variations de cette capacité naturelle, par exemple suite à l'ouverture d'une portière ou d'un toit ouvrant. Le circuit résonant 125 assure à la fois un filtrage spectral du signal émis et une élévation de sa tension. Une capacité de grande dimension, non représentée, est avantageusement branchée en sortie de l'amplificateur 24 pour protéger les utilisateurs des éventuelles décharges continues accidentelles dans les électrodes. Pour réaliser le circuit résonant 125, il est aussi possible de permuter la capacité 33 et l'inductance 34.

Un sélecteur d'antenne 35 est prévu sur une seule des bornes de sortie, l'autre étant reliée à la masse 15. A titre illustratif, le sélecteur d'antenne 35 représenté permet de sélectionner l'une des électrodes 5, 6 et 10. En variante, un deuxième sélecteur d'antenne pourrait être prévu de manière analogue au premier mode de réalisation.

En pratique, le ou les sélecteurs d'antennes doivent être conçus en fonction du nombre d'électrodes d'émission équipant le véhicule et des zones de transmission que l'on souhaite créer. Le multiplexage entre le générateur de signal 23 et les différentes électrodes peut être effectué à plusieurs niveaux. Par exemple, dans une variante de réalisation non représentée, le multiplexage est effectué par un commutateur basse tension en amont du transformateur 25. Il est alors prévu autant de transformateurs que de bornes de sortie.

Dans un mode de réalisation particulièrement simple, l'intérieur de l'habitacle 4 forme une seule zone de transmission, qui est de préférence couverte par une électrode intérieure unique. Toutefois, il peut être avantageux de prévoir plusieurs électrodes d'émission agencées pour émettre des champs électriques polarisés différemment, de manière à accroître la probabilité d'une réception correcte par l'identifiant 3.

Pour localiser l'identifiant 3, l'unité centrale 2 peut procéder en émettant successivement des messages d'interrogation dans différentes zones de transmission, tant à l'intérieur qu'à l'extérieur du véhicule 1 et en comparant la réponse de l'identifiant 3 en fonction de la ou des électrodes d'émission utilisées. La carrosserie du véhicule 1, du fait qu'elle est au moins partiellement métallique, joue le rôle d'une cage de Faraday qui atténue très nettement le champ électrique. Ainsi, lorsqu'on alimente seulement des électrodes extérieures, le champ électrique à l'intérieur du véhicule est très faible, et inversement. Grâce à l'utilisation d'antennes d'émission de type électrique, la zone de transmission intérieure est sensiblement disjointe de la ou des zones de transmission extérieures. Si les zones de transmission sont bien disjointes, l'identifiant 3 ne répondra qu'à un seul message d'interrogation, au plus, de sorte que la localisation sera immédiate. Par la suite, l'unité centrale 2 détermine si l'identifiant 3 se trouve à une position où l'exécution de la commande demandée est autorisée et décide de poursuivre ou non l'exécution de la commande.

Si une localisation de l'identifiant 3 de type binaire est suffisante, c'est-à-dire de déterminer si l'identifiant 3 est ou n'est pas à l'intérieur de l'habitacle 4, il n'est pas nécessaire de prévoir d'électrode extérieure.

Si une localisation plus précise est nécessaire, par exemple si les zones de transmission de différentes électrodes ne sont pas vraiment disjointes, il est aussi possible de mesurer l'amplitude du champ électrique reçu par l'identifiant 3 pour chaque message d'interrogation émis, lesquels peuvent comporter des codes distincts, et d'effectuer une localisation différentielle. Par exemple, en référence à la figure 2, l'identifiant 3 peut mesurer la différence entre le champ E₁ et le champ E₂ qu'il reçoit, pour déterminer s'il se trouve plus proche de l'électrode 7 ou de l'électrode 8 et indiquer cette information à l'unité centrale 2.

La carrosserie du véhicule 1 peut comporter des parties non métalliques, par exemple en matériaux composites. L'obtention d'un effet de cage de Faraday ne requiert pas une paroi métallique continue tout autour de l'espace intérieur du véhicule, mais seulement la présence d'un certain maillage d'éléments métalliques autour de cet espace intérieur, dont l'efficacité est d'autant meilleure qu'il ne laisse pas des ouvertures importante par rapport à la longueur d'onde considérée. Or, aux fréquences considérées, les ouvertures dans la carrosserie, par exemple les fenêtres, ont des dimensions petites par rapport à la longueur d'onde de l'onde porteuse. La carrosserie offre en outre une protection contre les perturbations électriques extérieures, comme la présence de lignes à hautes tensions.

On décrit maintenant l'identifiant portatif 3. En référence aux figures 6 et 7, l'identifiant 3 comporte un boîtier en plastique 36, par exemple de forme ellipsoïdale ou parallélépipédique, abritant une carte à circuit imprimé 37 portant un circuit électronique 38 incluant un émetteur et un récepteur radiofréquence. La carte à circuit imprimé 37 est collée ou fixée contre la surface intérieure d'une paroi 39 du boîtier 36. Le circuit 38 est tourné vers l'intérieur du boîtier 36.

Plusieurs électrodes de réception sont agencées dans le boîtier en plastique 36 et reliées au circuit électronique 38. Deux électrodes 40a et 40b sont réalisées sous la forme de pastilles de cuivre, qui sont disposées sur la carte 37 au voisinage de deux bords opposés le long de d'une direction X. Deux électrodes 41a et 41b sont réalisées sous la forme de pastilles de cuivre disposées sur la carte 37 au voisinage de deux bords opposés le long d'une direction Y perpendiculaire à la direction X. Les électrodes 40a, 40b ,41a, 41b sont des électrodes isolées individuellement du reste des composants électriques de la carte 37, par exemple au moyen d'une couche de résine époxy, et individuellement reliées par des pistes conductrices 45 à des entrées de potentiel respectives d'un circuit récepteur, qui sera décrit plus bas. Ces électrodes peuvent être très petites par rapport à la longueur d'onde à recevoir, car la réception d'un champ électrique ne demande pas de résonance d'antenne. Néanmoins, l'amplitude du signal électrique capturé dépend de la surface des électrodes de réception et de leur écartement mutuel.

Une électrode 42 est réalisée sous la forme d'un film métallique collé ou déposé sur la surface intérieure de la paroi 44 du boîtier, qui opposée à la paroi 39 le long d'une direction Z perpendiculaire aux directions X et Y. Une languette conductrice 43 relie individuellement l'électrode 42 à une entrée de potentiel respective du circuit récepteur.

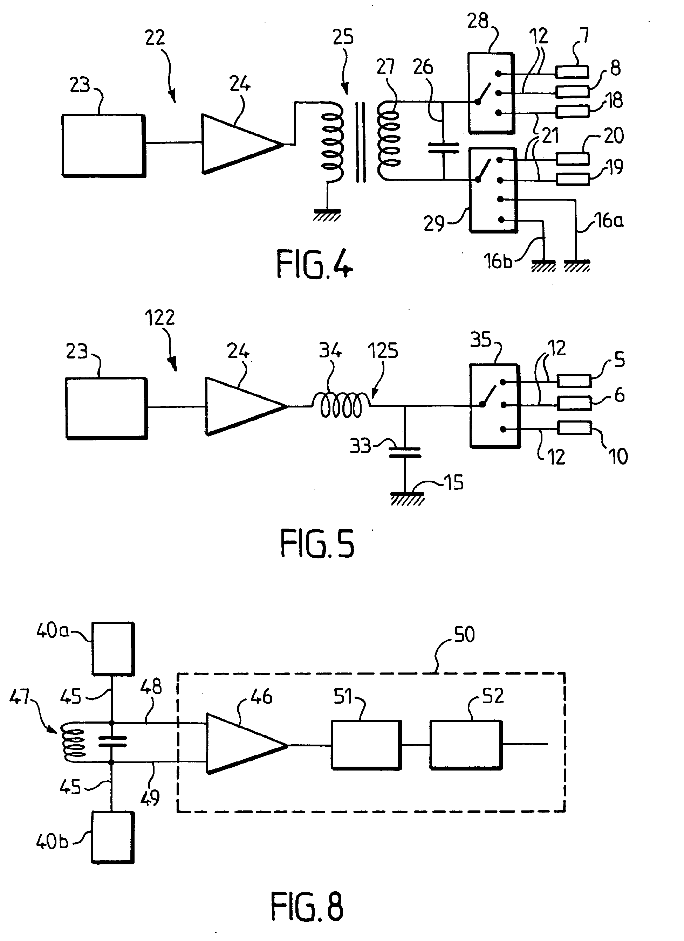

Les figures 8 à 10 représentent trois modes de réalisation du circuit récepteur porté par la carte 37. Pour chaque mode de réalisation, le circuit récepteur est représenté connecté aux électrodes 40a et 40b, pour détecter une composante de champ électrique orientée selon la direction X. Toutefois, un autre circuit identique est à chaque fois également prévu en liaison avec les électrodes 41 a et 41 b, pour détecter une composante de champ électrique orientée selon la direction Y, et en liaison avec l'électrode 42 et la masse, pour détecter une composante de champ électrique orientée selon la direction Z. La masse électrique de l'identifiant est formée par un ensemble de conducteurs (composants, fils de liaison, blindage) agencés sur la carte à circuit imprimé 37 qui ont une très grande capacité et restent donc inertes dans le champ électrique émis. On choisit une entrée de forme asymétrique pour l'électrode 42 parce que l'épaisseur du boîtier 36 ne permet pas de placer une électrode sur la surface opposée 39 et qu'une surface relativement importante est disponible pour l'électrode 42. Toutefois, une entrée de forme symétrique peut être choisie pour la direction Z comme pour les directions Y et X lorsque la géométrie du boîtier 36 le permet.

Dans le mode de réalisation de la figure 8, le circuit récepteur 50 peut être réalisé sous la forme de composants discrets. Les électrodes 40a et 40b sont reliées à deux entrées différentielles 48 et 49 d'un amplificateur 46. De manière optionnelle, un filtre analogique passe bande 47 peut être connecté entre les entrées différentielles 48 et 49 pour sélectionner la fréquence de porteuse devant être reçue et éliminer les parasites. Dans ce cas, le facteur de qualité ne doit pas être trop élevé, par exemple de l'ordre de 10. En sortie de l'amplificateur 46, le signal représentant la différence de potentiel entre les électrodes 40a et 40b est numérisé par un convertisseur analogique numérique 51 et filtré par un filtre numérique passe bande 52. Le filtre 52 est optionnel lorsqu'un filtre analogique 47 est présent.

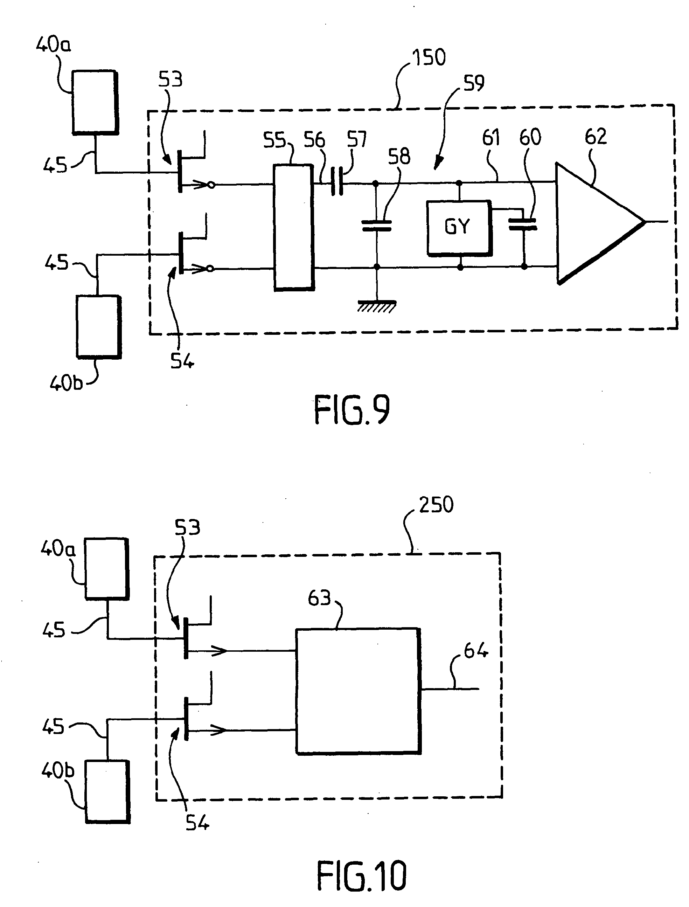

Dans le mode de réalisation de la figure 9, le circuit récepteur 150 est réalisé sous la forme d'un circuit intégré spécifique. Les électrodes 40a et 40b sont reliées à la grille de deux transistors MOS 53 et 54, permettant d'obtenir une très haute impédance d'entrée et une capacité très petite. La source de chacun des transistors MOS 53 et 54 alimente un préamplificateur de conversion 55, servant à convertir les deux signaux d'entrée symétriques en un signal asymétrique, qui est obtenu sur une sortie 56, laquelle est reliée à un filtre passe bande 59 par l'intermédiaire d'une capacité de liaison 57. Le filtre passe bande 59 sert à sélectionner la fréquence de porteuse devant être reçue et comporte une capacité de résonance 58 connectée en parallèle avec un composant convertisseur d'impédance GY. La valeur des capacités 57 et 58 est par exemple entre 10 et 100 pF. Le convertisseur d'impédance GY engendre une inductance L à partir et en fonction d'une capacité de référence 60 qui lui est reliée. La valeur de la capacité 60 est par exemple de 10nF. La capacité 60 est réalisée à l'extérieur du circuit intégré. La borne de sortie 61 du filtre passe bande 59 alimente un amplificateur 62. On obtient en sortie un signal filtré amplifié représentant la différence de potentiel entre les électrodes 40a et 40b. La suite du traitement de ce signal est classique.

Le mode de réalisation de la figure 10 est analogue à celui de la figure 9 du côté entrée. Dans le circuit récepteur 250, les transistors MOS 53 et 54 alimentent un filtre passe bande 63 analogique ou numérique, réalisé de manière intégrée et servant à sélectionner la fréquence de porteuse devant être reçue. On obtient sur la sortie 64 un signal filtré représentant la différence de potentiel entre les électrodes 40a et 40b. La suite du traitement de ce signal est classique. Ce mode de réalisation permet d'effectuer le traitement du signal reçu de manière entièrement intégrée, c'est-à-dire dans un composant en silicium, ce qui réduit la sensibilité aux perturbations extérieures.

Dans le circuit récepteur 50, 150 ou 250, on prévoit de préférence une protection des entrées contre les décharges statiques, qui n'est pas représentée car classique.

Pour certaines applications, on peut se passer d'une liaison radio descendante entre l'identifiant 3 et l'unité centrale 2. Par exemple, l'identifiant 3 peut servir à mémoriser des données de fonctionnement du véhicule qui sont périodiquement mise à jour par l'envoi d'un message depuis l'unité centrale 2. Ces données restent ainsi à disposition de l'utilisateur. Un écran peut être prévu sur l'identifiant 3 pour visualiser ces données, incluant par exemple une clé de déverrouillage d'un système de sécurité du véhicule.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Véhicule (1) comportant un espace intérieur (4,11) délimité par des parois et un dispositif de communication embarqué (2) comprenant un émetteur radiofréquence (22, 122) muni d'au moins une antenne d'émission pour émettre un message d'interrogation avec une fréquence d'onde porteuse prédéterminée inférieure à 100 MHz à destination d'un identifiant portatif (3), **caractérisé par le fait que** ladite au moins une antenne d'émission inclut au moins une électrode d'émission (5-10, 18-20) en liaison électrique avec une sortie de potentiel dudit émetteur radiofréquence (22, 122), ladite ou chaque électrode d'émission n'étant pas sensiblement résonante à ladite fréquence d'onde porteuse pour rayonner essentiellement un champ électrique (E₁₋₂) dans une zone de champ proche de ladite électrode d'émission.

2. Véhicule selon la revendication 1, **caractérisé par le fait qu'**au moins une électrode d'émission (5-10) est agencée dans ledit espace intérieur, par exemple sur ou dans au moins un organe choisi parmi une planche de bord (5), l'assise d'un siège avant (7,8), le dossier d'un siège avant, l'assise d'un siège arrière (9), le dossier d'un siège arrière, une plage arrière (6) et une console centrale (10).

3. Véhicule selon la revendication 1 ou 2, **caractérisé par le fait qu'**au moins une électrode d'émission (18-20) est agencée à l'extérieur dudit espace intérieur.

4. Véhicule selon la revendication 3, **caractérisé par le fait qu'**au moins une électrode d'émission extérieure est agencée sur ou dans au moins un organe choisi parmi un pare-choc avant (18), un pare-choc arrière (19, 20), une poignée de portière et un rétroviseur.

5. Véhicule selon l'une des revendications 1 à 4, **caractérisé par le fait qu'**au moins une électrode d'émission est agencée sur ou dans une vitre de fenêtre.

6. Véhicule selon l'une des revendications 1 à 5, **caractérisé par le fait que** ladite ou chaque électrode d'émission est alimentée par l'intermédiaire d'un transformateur élévateur de tension (25).

7. Véhicule selon l'une des revendications 1 à 6, **caractérisé par le fait que** ladite ou chaque électrode d'émission est alimentée par l'intermédiaire d'un circuit passe bande (26-27, 125) présentant une résonance dans une plage de résonance incluant ladite fréquence d'onde porteuse.

8. Véhicule selon l'une des revendications 1 à 7, **caractérisé par le fait que** ledit émetteur radiofréquence comporte une borne de masse (15, 17a, 17b) en liaison électrique avec des parois métalliques du véhicule.

9. Véhicule selon l'une des revendications 1 à 8, **caractérisé par le fait que** ledit dispositif de communication embarqué comporte au moins deux électrodes d'émission (18-20) reliées respectivement à au moins deux sorties de potentiels dudit émetteur radiofréquence (22), ledit émetteur radiofréquence étant apte à produire une différence de potentiel entre lesdites sorties de potentiel pour émettre ledit message d'interrogation.

10. Véhicule selon l'une des revendications 1 à 9, **caractérisé par le fait que** ledit dispositif de communication embarqué comporte plusieurs électrodes d'émission (5-10, 18-20), lesdites électrodes d'émission étant reliées à au moins un sélecteur d'antenne (28, 29, 35) dudit émetteur radiofréquence (22, 122) apte à sélectionner différentes électrodes d'émission et/ou différents couples d'électrodes d'émission pour émettre ledit message d'interrogation.

11. Identifiant portatif (3) destiné à communiquer avec un dispositif de communication (2) embarqué dans un véhicule (1), ledit identifiant comprenant un récepteur radiofréquence muni d'une antenne de réception apte à recevoir un message d'interrogation à une fréquence d'onde porteuse prédéterminée inférieure à 100 MHz depuis ledit dispositif de communication, **caractérisé par le fait que** ladite antenne de réception comporte au moins une paire d'électrodes de réception (40a-b, 41 a-b) mutuellement espacées qui sont respectivement en liaison électrique avec au moins une paire d'entrées de potentiel (48-49, 53-54) dudit récepteur radiofréquence (50, 150, 250) pour produire entre lesdites entrées de potentiel une différence de potentiel dépendant d'un champ électrique environnant.

12. Identifiant selon la revendication 11, **caractérisé par le fait qu'**il comporte plusieurs paires d'électrodes de réception (40a-b, 41a-b) présentant des espacements mutuels selon plusieurs directions distinctes (X, Y).

13. Identifiant selon la revendication 11 ou 12, **caractérisé par le fait que** ladite ou chaque électrode de réception (40a-b, 41a-b, 42) n'est pas sensiblement résonante à ladite fréquence d'onde porteuse.

14. Identifiant selon l'une des revendications 11 à 13, **caractérisé par le fait que** chacune desdites entrées de potentiel comporte un composant (53-54) à haute impédance et très faible capacité.

15. Identifiant selon l'une des revendications 11 à 14, **caractérisé par le fait que** ladite ou chaque paire d'électrodes de réception alimente de manière différentielle un amplificateur (46) dudit récepteur radiofréquence (50).

16. Identifiant selon l'une des revendications 11 à 15, **caractérisé par le fait que** ledit récepteur radiofréquence comporte un filtre passe bande (59) comprenant un convertisseur d'impédance (GY) relié à une capacité (60) pour représenter une inductance.

17. Identifiant selon l'une des revendications 11 à 16, **caractérisé par le fait qu'**au moins une desdites électrodes de réception (42) est constituée d'un revêtement métallique, qui est agencé sur une surface intérieure d'un boîtier d'identifiant (36) en matière isolante et relié électriquement à une entrée de potentiel dudit récepteur radiofréquence.

18. Identifiant selon l'une des revendications 11 à 17, **caractérisé par le fait qu'**au moins une desdites électrodes de réception est remplacée par une masse électrique (38) dudit identifiant.

19. Procédé de transmission de signal entre un véhicule (1) muni d'un émetteur radiofréquence (22, 122) embarqué et un identifiant portatif (3) muni d'un récepteur radiofréquence, comprenant l'étape consistant à transmettre un signal avec une fréquence d'onde porteuse prédéterminée inférieure à 100 MHz entre une antenne d'émission dudit émetteur et une antenne de réception dudit récepteur, **caractérisé par le fait que** ledit signal est transmis en réalisant un couplage essentiellement électrique en champ proche entre au moins une électrode d'émission (5-10, 18-20) faisant partie de ladite antenne d'émission et au moins une électrode de réception (5-10, 18-20) faisant partie de ladite antenne de réception.

20. Procédé selon la revendication 19, dans lequel le niveau du signal émis par ladite au moins une électrode d'émission est réglé de manière à empêcher ladite transmission lorsque la distance entre le véhicule et l'identifiant dépasse une distance autorisée qui est inférieure ou égale à la longueur d'onde de ladite onde porteuse dans l'air.
